# EUROPÄISCHE PATENTSCHRIFT

(11) **EP 0 804 315 B1**
(45) Veröffentlichungstag und Bekanntmachung des Hinweises auf die Patenterteilung: **28.07.1999**
(21) Anmeldenummer: 95904526.1
(22) Anmeldetag: 22.12.1994
(51) Int. Cl.: B23Q 5/04, B23Q 11/04, B25B 21/02, E21B 3/02, B23D 47/12, B23D 29/00, B24B 47/10

(54) **WERKZEUGMASCHINE**
MACHINE-TOOL
MACHINE-OUTIL

(30) Priorität: 29.12.1993 DE 4344849
(43) Veröffentlichungstag der Anmeldung: 05.11.1997
(73) Patentinhaber: C. & E. FEIN GmbH & Co., D-70176 Stuttgart (DE)
(72) Erfinder: PEISERT, Andreas, D-70195 Stuttgart (DE); KOFINK, Wolfgang, D-89522 Heidenheim (DE); NOTHOFER, Michael, D-70806 Kornwestheim (DE); LUDWIG, Manfred, D-70195 Stuttgart (DE)
(74) Vertreter: Gahlert, Stefan, Dr.-Ing.
(86) Internationale Anmeldenummer: EP9404281
(87) Internationale Veröffentlichungsnummer: WO9517991

(56) Entgegenhaltungen:
- EP-A- 0 182 986
- DE-A- 2 039 369
- DE-A- 2 328 826
- US-A- 2 392 097
- US-A- 2 825 436
- US-A- 4 591 299
- US-A- 4 799 833

## Beschreibung

Die Erfindung betrifft eine Werkzeugmaschine in Form eines Schraubers mit einem Antrieb, der eine Abtriebswelle umfaßt, die eine intermittierende Drehbewegung ausführt, und die über eine Freilaufkupplung mit einer Werkzeugantriebswelle zum Antrieb eines Werkzeuges gekoppelt ist.

Eine derartige als Schrauber verwendbare Werkzeugmaschine ist aus der US-A-2 392 097 bekannt.

Bei dem bekannten Schrauber wird die Drehbewegung eines Elektromotors in eine um eine feste Drehachse hin- und heroszillierende Drehbewegung umgesetzt, die dann wiederum über einen Ratschentrieb, der nur in einer Drehrichtung mitnimmt, in eine intermittierende Drehbewegung einer Werkzeugantriebswelle zum Antrieb eines Werkzeugs umgesetzt wird.

Grundsätzlich besteht bei Werkzeugmaschinen, die als Schrauber oder Bohrer eingesetzt werden, das Problem, ein ausreichend großes Drehmoment auf das Werkzeug zu übertragen, während gleichzeitig die Antriebsleistung möglichst gering gehalten werden soll.

Die zuvor genannte Werkzeugmaschine ermöglicht zwar die Übertragung eines relativ großen Drehmomentes auf das Werkzeug, erlaubt jedoch keine präzise Abschaltung des Antriebes bei Erreichung eines vorgegebenen Drehmomentes.

Um bei Schraubern ein hohes Anzugsmoment zu erzielen, sind auch Impulsschrauber oder Schlagschrauber bekannt, bei denen hohe Drehmomente von mehreren 100 Nm erzielbar sind.

Jedoch entstehen hierbei relativ hohe Reaktionsmomente für den Benutzer. Zusätzlich kann die durch den Schlagimpuls bedingte Beanspruchung der Schrauben und Muttern zu Beschädigungen führen. Schließlich sind derartige Impulsschrauber nur für sehr hohe Drehmomente geeignet und erlauben keine Feineinstellung eines vorgegebenen Drehmomentes.

Der Erfindung liegt demnach die Aufgabe zugrunde, eine als Schrauber einsetzbare Werkzeugmaschine zu schaffen, mit der ein hohes Drehmoment des Werkzeuges mit einer relativ geringen

Antriebsleistung erzielbar ist, die ein möglichst geringes Reaktionsmoment aufweist und eine möglichst präzise Abschaltung des Schraubers bei Erreichen eines vorgegebenen Drehmomentes ermöglicht.

Diese Aufgabe wird bei einem Schrauber gemäß der eingangs genannten Art erfindungsgemäß dadurch gelöst, daß eine Abschalteinrichtung zur Abschaltung des Antriebes bei Erreichen eines vorgegebenen Drehmomentes und eine Trenneinrichtung zum Trennen der Werkzeugantriebswelle vom Antrieb vorgesehen sind, daß die Trenneinrichtung ein mit der Werkzeugantriebswelle drehbar verbundenes erstes Kupplungselement aufweist, das mit der Abtriebsseite einer Freilaufkupplung koppelbar ist, sowie ein zweites Kupplungselement aufweist, das drehfest mit der Werkzeugantriebswelle verbunden ist, daß zwischen dem ersten Kupplungselement und dem zweiten Kupplungselement ein Zwischenkupplungselement angeordnet ist, das mit dem zweiten Kupplungselement eine Mitnahmekupplung bildet, über die das Zwischenkupplungselement unter Last in Richtung auf das erste Kupplungselement verschiebbar ist, daß das Zwischenkupplungselement mit dem ersten Kupplungselement eine bei Axialverschiebung des Zwischenkupplungselementes ausrückbare Trennkupplung bildet, und daß das Zwischenkupplungselement in Richtung auf das zweite Kupplungselement federnd beaufschlagt ist.

Die Aufgabe der Erfindung wird auf diese Weise vollkommen gelöst, da ein hohes Drehmoment bei relativ kleiner Antriebsleistung erzielbar ist, da das Reaktionsmoment aufgrund des neuartigen Antriebes relativ gering gehalten wird und durch den Aufbau der Abschalteinrichtung und der Trenneinrichtung zum Trennen der Werkzeugantriebswelle ein recht genaues Einhalten eines vorgegebenen Anzugsmomentes erreichen läßt.

Mit einem erfindungsgemäßen Schrauber lassen sich ohne weiteres Anzugsmomente bis zu 35 Nm mit Handwerkzeugen erzielen. Derartig hohe Anzugsmomente konnten bislang nur mit Impulsschraubern oder Schlagschraubern erreicht werden.

Gegenüber herkömmlichen Impulsschraubern oder Schlagschraubern zeichnet sich ein erfindungsgemäßer Schrauber insbesondere dadurch aus, daß sich das Anzugsmoment in einem weiten Bereich sehr genau voreinstellen läßt, sofern eine entsprechende Drehmomentabschaltung vorgesehen ist.

Ferner ist das Reaktionsmoment gegenüber herkömmlichen Schraubern mit Abschalteinrichtung erheblich reduziert. Gleichzeitig werden anzuziehende oder zu lösende Schrauben oder Muttern erheblich weniger beansprucht als beim Arbeiten mit herkömmlichen Impuls- oder Schlagschraubern.

In vorteilhafter Weiterbildung der Erfindung ist eine Einrichtung zur Umkehr der Drehrichtung der Abtriebswelle vorgesehen.

Somit läßt sich eine Umschaltung erreichen, um Schrauben lösen oder anziehen zu können.

Zusätzlich kann eine Stelleinrichtung zur Voreinstellung des Abschaltmomentes vorgesehen sein.

Die intermittierende Drehbewegung der Abtriebswelle des Antriebes kann grundsätzlich auf verschiedene Arten erzeugt werden.

So kann beispielsweise die Drehbewegung eines Antriebsmotors über einen Oszillationsantrieb in eine oszillierende Drehbewegung umgesetzt werden. Alternativ kann ein Drehmagnet oder ein Schrittmotor verwendet werden, der über eine entsprechende Spannungsimpulsfolge angesteuert wird.

Im ersten Fall umfaßt der Antrieb der erfindungsgemäßen Werkzeugmaschine einen Motor, der mit einem Oszillationsantrieb gekoppelt ist, über den eine Drehbewegung der Motorwelle in eine oszillierende Drehbewegung der die Freilaufkupplung antreibenden Abtriebswelle umgesetzt wird.

Derartige Oszillationsantriebe sind grundsätzlich bekannt und können vorteilhaft für diese Ausführung verwendet werden.

Die Verwendung eines derartigen Oszillationsantriebes bei einer erfindungsgemäßen Werkzeugmaschine hat den Vorteil, daß sich infolge der um eine gerätefeste Schwenkachse oszillierenden Drehbewegung der Abtriebswelle des Oszillationsantriebes ein praktisch reaktionsfreies Arbeiten ergibt, da jeder Drehbewegung der Abtriebswelle des Oszillationsantriebes in Drehrichtung des Werkzeuges eine gleich lange Drehbewegung in entgegengesetzter Richtung folgt. Da sich somit lediglich das Werkzeug samt Werkzeugaufnahme und Freilauf ausschließlich in einer Drehrichtung bewegt, während der Oszillationsantrieb eine oszillierende Drehbewegung ausführt, wird das Reaktionsmoment nochmals deutlich reduziert, so daß ein besonders reaktionsmomentarmes Arbeiten ermöglicht wird oder andererseits eine größere Antriebsleistung verwendet werden kann, so daß höhere Drehmomente auf das Werkzeug übertragen werden können, also etwa größere Bohrdurchmesser erzielt werden können oder zum Beispiel höhere Anzugsmomente beim Schrauben erzielt werden können.

Dabei kann die Amplitude der Oszillationsbewegung um die gerätefeste Drehachse dem jeweiligen Anwendungsfall angepaßt werden. Zusätzlich kann etwa durch eine elektronische Drehzahlregelung die Frequenz des Oszillationsantriebes veränderbar ausgeführt sein, um die Leistung des Werkzeuges zu regeln.

Der Oszillationsantrieb kann grundsätzlich auf verschiedene Arten ausgeführt sein.

Bei einer bevorzugten Ausführung umfaßt der Oszillationsantrieb ein von der Motorwelle angetriebenes Exzenterelement, von dem ein Schwenkelement angetrieben ist, das mit der Abtriebswelle drehfest verbunden ist.

Als Antriebsmotor kann ein Elektromotor, ein Druckluftmotor, ein Hydraulikmotor oder dergleichen vorgesehen sein.

Eine andere Möglichkeit für die Erzeugung einer intermittierenden Drehbewegung der Abtriebswelle besteht in der Verwendung eines Drehmagneten, der mit einer Spannungsimpulsfolge zur Erzeugung der intermittierenden Drehbewegung beaufschlagt ist.

Diese Maßnahme hat den Vorteil, daß sich eine besonders einfache Bauart ergibt, da lediglich ein Drehmagnet erforderlich ist, der über eine entsprechende Steuerelektronik mit einer Spannungsimpulsfolge beaufschlagt ist.

Als Drehmagnet kann hierbei ein Einrichtungsdrehmagnet verwendet werden, sofern dieser mit einer Rückstellkraft entgegen der Drehrichtung beaufschlagt ist, die etwa über eine Feder erzeugt werden kann.

In alternativer Weise kann der Drehmagnet auch als Zweirichtungsdrehmagnet ausgebildet sein, sofern auf eine Rückstellfeder verzichtet werden soll. Hierbei muß natürlich die elektronische Steuerung einen entsprechenden Rückstellimpuls erzeugen.

Eine Überlastung des Antriebes ist praktisch ausgeschlossen, da bei Stillstand des Werkzeuges die Antriebsenergie impulsartig auf das Werkzeug übertragen wird.

Eine Steuerung der Leistung kann auf einfache Weise dadurch erreicht werden, daß die Impulsenergie der Spannungsimpulsfolge mit konstanter Frequenz mittels einer Pulsbreiten-Modulation (PWM) einstellbar ist. Das auf das Werkzeug übertragene Drehmoment ist dabei abhängig von der Impulsenergie.

Alternativ oder zusätzlich kann in gewissen Grenzen auch die Impulsfrequenz verändert werden, um die Leistung des Werkzeuges zu steuern. Dabei kann die Frequenz natürlich nur in gewissem Rahmen verändert werden, da das mechanisch schwingende System einerseits in Resonanz gebracht werden könnte oder da andererseits bei zu hoher Frequenz ein Stehenbleiben des Drehmagneten die Folge sein könnte.

Gemäß einer Weiterbildung der Erfindung ist die Abtriebswelle von zwei im Abstand voneinander angeordneten Lagern aufgenommen, wobei das eine Lager in Radialrichtung der Abtriebswelle fixiert ist, während das andere Lager gegen eine Vorspannung in Radialrichtung verschiebbar angeordnet ist, wobei der Abtriebswelle ein Sensorelement zugeordnet ist, um den Antrieb bei Auftreten einer Radialverschiebung abzuschalten.

Diese Ausführung ermöglicht eine präzise Abschaltung des Antriebes bei Erreichen eines voreingestellten Anzugsmomentes. Da eines der beiden die Abtriebswelle aufnehmenden Lager in Radialrichtung gegen eine Vorspannung verschieblich angeordnet ist, führt die Abtriebswelle bei ansteigendem Drehmoment am Ende einer Verschraubung eine leichte Kippbewegung durch, sobald die durch das Drehmoment ausgeübte Reaktionskraft groß genug ist, um die Wirkung der auf das verschieblich angeordnete Lager wirkenden Vorspannung zu überwinden. Diese Kippbewegung wird von einem Sensorelement erfaßt und zur Abschaltung des Antriebes genutzt. Gemäß diesem an sich bekannten Aufbau (EP-B-0 182 986) läßt sich eine präzise Abschaltung des Antriebes bei Erreichen eines vorgegebenen Drehmomentes durchführen.

In weiter bevorzugter Ausgestaltung ist bei der vorgenannten Ausführung eine Stelleinrichtung zur Erzeugung einer einstellbaren Vorspannung vorgesehen, um eine Einstellung des Abschaltmomentes zu ermöglichen.

Dabei kann das andere Lager von einer Gleitführung aufgenommen sein, die eine Verschiebung in Radialrichtung der Abtriebswelle erlaubt.

Bei einer weiter bevorzugten Ausgestaltung der Erfindung sind eine erste im Uhrzeigersinn mitnehmende Freilaufkupplung und eine zweite im Gegenuhrzeigersinn mitnehmende Freilaufkupplung in Axialrichtung hintereinander angeordnet, wobei ein Schaltelement vorgesehen ist, um wahlweise entweder die erste oder die zweite Freilaufkupplung mit der Werkzeugantriebswelle zu koppeln.

Auf diese Weise läßt sich eine Umschaltung der Drehrichtung der Werkzeugantriebswelle in einfacher Weise unter Verwendung zweier in umgekehrter Richtung wirkender Freilaufkupplungen erreichen, von denen jeweils die eine oder die andere wahlweise mit der Werkzeugantriebswelle gekoppelt wird.

Gemäß einer Weiterbildung dieser Ausführung ist das Schaltelement als Schiebehülse ausgebildet, die in Axialrichtung der Abtriebswelle verschiebbar gelagert ist, wobei in einer ersten in Richtung auf die Werkzeugantriebswelle vorgeschobenen Position der Schiebehülse die erste Freilaufkupplung über die Schiebehülse mit der Werkzeugantriebswelle gekoppelt ist, und wobei in einer zweiten zurückgeschobenen Position der Schiebehülse die zweite Freilaufkupplung mit der Werkzeugantriebswelle gekoppelt ist.

Auf diese Weise ergibt sich eine einfache Umschaltung zwischen Links- und Rechtslauf, indem lediglich die Schiebehülse in Axialrichtung verschoben werden muß.

Gemäß einer weiteren Ausgestaltung der Erfindung ist die Schiebehülse in der ersten Position über eine Klauenkupplung mit der Werkzeugantriebswelle gekoppelt und in der zweiten Position über einen Längsschlitz der Schiebehülse mit der Werkzeugantriebswelle gekoppelt, in den ein die Werkzeugantriebswelle durchsetzender Querstift eingreift.

Auf diese Weise läßt sich entweder eine direkte Kopplung der Schiebehülse über den Querstift an die Werkzeugantriebswelle erreichen oder aber eine Kopplung über eine Klauenkupplung, die sich in vorteilhafter Weise noch mit einer Einrichtung zum Trennen der Werkzeugantriebswelle vom Antrieb verbinden läßt.

In vorteilhafter Weiterbildung der Erfindung weist die durch das erste Kupplungselement und das Zwischenkupplungselement gebildete Trennkupplung gerade Nocken mit einer sich senkrecht zur einer Radialebene erstreckenden Mitnahmeflanke an einem der Elemente auf, sowie abgesetzte Nocken mit einem geraden Abschnitt, bei dem sich die Mitnahmeflanke senkrecht zu einer Radialebene erstreckt, und mit einem schrägen, sich an den geraden Abschnitt anschließenden Abschnitt, bei dem sich die Mitnahmeflanke schräg zu einer Radialebene erstreckt, an einem der anderen Elemente auf.

Durch diese Nockenform wird beim Anlaufen der Werkzeugmaschine ein Einrücken der Trennkupplung sichergestellt. Hierzu sollte die Steigung der schrägen Abschnitte der abgesetzten Nocken so bemessen sein, daß zunächst das Zwischenkupplungselement mit seinen geraden Nocken zwischen die geraden Nockenabschnitte des ersten Kupplungselementes eingreift, bevor das Zwischenkupplungselement unter Wirkung des übertragenen Drehmomentes in Richtung auf das zweite Kupplungselement verschoben wird.

Gemäß einer weiteren Ausgestaltung der Erfindung weist das zweite Kupplungselement einen sich in Radialrichtung erstreckenden Vorsprung auf, der mit einer Führungskurve des Zwischenkupplungselementes, die sich schräg zu einer Radialebene erstreckt, zusammenwirkt.

Diese Maßnahme hat den Vorteil eines besonders einfachen und kostengünstig herstellbaren Aufbaus der Mitnahmekupplung.

Dabei kann in zusätzlicher Weiterbildung der Erfindung der sich in Radialrichtung erstreckende Vorsprung durch einen Querstift gebildet sein, der die Abtriebswelle in Radialrichtung durchsetzt.

Somit läßt sich die Mitnahmekupplung auf besonders einfache Weise durch einen in einer Radialbohrung fixierbaren Querstift in Verbindung mit einer schräg zu einer Radialebene angeordneten Führungskurve realisieren. Dabei sollte die Neigung der Führungskurve größer als die Neigung der schrägen Nockenabschnitte des Zwischenkupplungselementes sein, um ein Einrücken der Trennkupplung am Anfang sicherzustellen.

Es zeigen :
- Fig. 1: ein erstes Ausführungsbeispiel der Erfindung als Schrauber in schematischer Darstellung, wobei ein Schaltelement zur Umschaltung zwischen Rechts- und Linkslauf vorgesehen ist, das sich in Rechtslaufposition befindet;
- Fig. 2: einen Ausschnitt des Schaltelementes mit der angrenzenden Werkzeugantriebswelle nach umschaltung des Schaltelementes von Rechts- auf Linkslauf;
- Fig. 3a: eine schematische Ansicht der Trenneinrichtung zur Trennung der Werkzeugantriebswelle vom Antrieb bei Erreichen eines vorgegebenen Grenzdrehmomentes beim Ansetzen der Maschine auf eine Schraube;
- Fig. 3b: eine Ansicht gemäß Fig. 3a, die in der oberen Hälfte die Stellung beim Anziehen einer Verschraubung und in der unteren Hälfte die Stellung nach dem Auslösen der Trenneinrichtung zeigt;
- Fig. 4: einen vereinfachten Schnitt durch den Oszillationsantrieb gemäß Fig. 1;
- Fig. 5: eine leicht gegenüber der Ausführung gemäß Fig. 1 abgewandelte Ausführung eines erfindungsgemäßen Schraubers;
- Fig. 6: eine teilweise geschnittene Seitenansicht der Ausführung gemäß Fig. 5, aus der der Aufbau der Einrichtung zur Abschaltung des Antriebes zu ersehen ist;
- Fig. 7: eine teilweise geschnittene Ansicht eines alternativ aufgebauten Oszillationsantriebes für eine erfindungsgemäße Werkzeugmaschine;
- Fig. 8: ein weiteres Ausführungsbeispiel der Erfindung als akkubetriebener Schrauber in schematischer Darstellung;
- Fig. 9: ein Schaltbild der Steuerelektronik für das Ausführungsbeispiel gemäß Fig. 8.

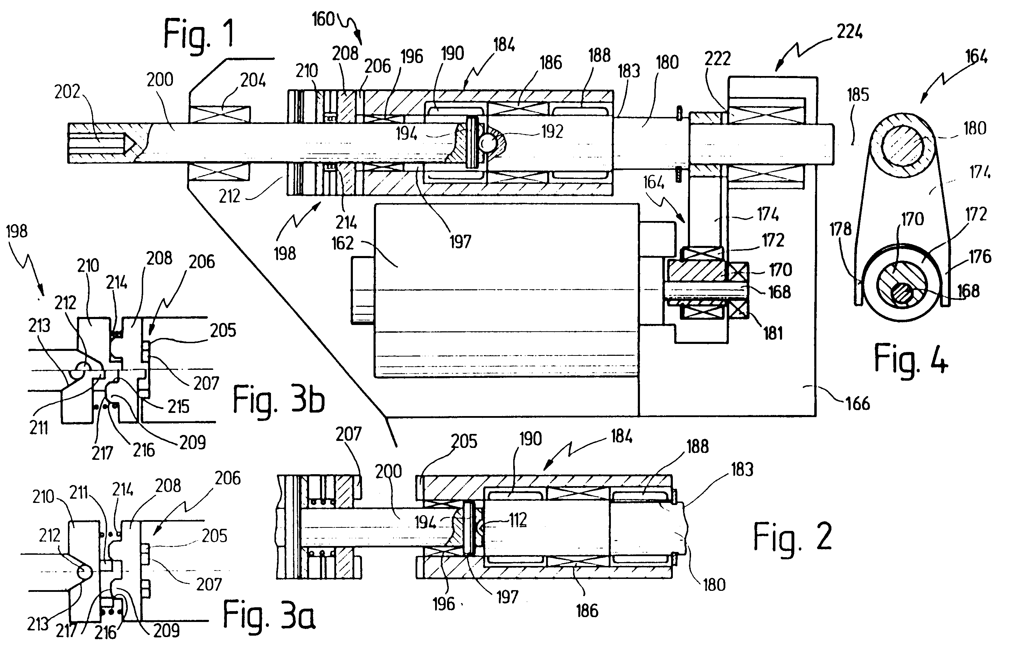

In Fig. 1 ist eine erfindungsgemäße Werkzeugmaschine, die als Schrauber Verwendung findet, äußerst schematisch dargestellt und insgesamt mit der Ziffer 160 bezeichnet.

Die Werkzeugmaschine 160 umfaßt einen Elektromotor 162, der über einen Oszillationsantrieb 164 eine Abtriebswelle 180 antreibt. Die Antriebswelle 180 ist wahlweise entweder über eine erste Freilaufkupplung 188, die im Uhrzeigersinn mitnimmt, oder über eine zweite Freilaufkupplung 190, die im Gegenuhrzeigersinn mitnimmt, mit einer Werkzeugantriebswelle 200 verbindbar, um ein in eine Werkzeugaufnahme 202 der Werkzeugantriebswelle 200 eingesetztes Werkzeug anzutreiben. Zur Umschaltung zwischen der ersten Freilaufkupplung 188 und der zweiten Freilaufkupplung 190, also zur Umschaltung zwischen Rechts- und Linkslauf, dient ein insgesamt mit der Ziffer 184 bezeichnetes Schaltelement.

Der Oszillationsantrieb 164 umfaßt gemäß den Fig 1 und 4 ein an der Motorwelle 168, die an ihrem aus dem Motorgehäuse hervorstehenden Ende an einem angeflanschten Halter 166 mittels eines Lagers 181 gelagert ist, angeordnetes Exzenterelement 170. Das Exzenterelement 170 ist von einer Nadelhülse 172 umschlossen, die als Drehlager dient. Auf der Abtriebswelle 180 ist ein Schwenkelement 174 drehfest angeordnet, an dessen in Richtung zur Motorwelle 168 vorstehendem Abschnitt durch einen U-förmigen Ausschnitt zwei Schwenkarme 176 gebildet sind, zwischen denen die Nadelhülse 172 von beiden Seiten her eingeschlossen ist. Die beiden an die Nadelhülse 172 angrenzenden Gleitflächen 178 sind auf Paßmaß bearbeitet, um eine spielfreie Übertragung der hin- und hergehenden Bewegung des Exzenterelementes 170 auf das Schwenkelement 174 zu erlauben, das so die Abtriebswelle 180 in eine oszillierende Bewegung um ihre Längsachse 185 versetzt.

Das Schaltelement 184 ist als zylindrische Schalthülse ausgebildet, die auf der Abtriebswelle 180 axial verschieblich gelagert ist. In der Schalthülse 184 sind hintereinander die erste Freilaufkupplung 188, ein Lager 186 und die zweite Freilaufkupplung 190 angeordnet. Die Schalthülse 184 ist mit dem Lager 186 auf der Abtriebswelle 180 axial verschiebbar und mit einem zweiten Lager 196, das an ihrem vorderen, der Werkzeugaufnahme 202 zugewandeten Ende vorgesehen ist, auf der Werkzeugantriebswelle 200 in Axialrichtung verschiebbar.

In der in Fig. 1 dargestellten Position befindet sich die Schalthülse 184 in einer ersten, in Richtung auf die Werkzeugaufnahme 202 hin vorgeschobenen Position, in der ihre der Werkzeugaufnahme 202 zugewandte Stirnfläche, die mit radial verlaufenden Nocken 205 versehen ist, zwischen Nocken 207 (Fig. 3a, b) eines ersten Kupplungselementes 208 einer nachfolgenden insgesamt mit der Ziffer 198 bezeichneten Trenneinrichtung eingreift, mit denen sie eine Klauenkupplung 206 bilden.

In der in Fig. 1 dargestellten Position wird daher das Drehmoment von der Abtriebswelle 180 über die erste Freilaufkupplung 188 auf die Schalthülse 184 übertragen, von der aus das Antriebsmoment über die Klauenkupplung 206 und die Trenneinrichtung 198 auf die Werkzeugantriebswelle 200 übertragen wird. In dieser Stellung ist die zweite Freilaufkupplung 190 außer Funktion. Die Werkzeugantriebswelle 200 weist einen geringeren Durchmesser als die Abtriebswelle 180 auf und ist an ihrem der Abtriebswelle 180 zugewandten Ende gegen diese mittels eines Axiallagers gelagert, das durch die Ziffer 192 angedeutet ist und im einfachsten Fall als Kugel ausgeführt ist, die in entsprechenden Ausnehmungen der Abtriebswelle 180 und der Werkzeugantriebswelle 200 gehalten ist. Die Werkzeugantriebswelle 200 ist an ihrem der Abtriebswelle 180 zugewandten Ende ferner von einem Querstift 194 durchsetzt, dessen beide Enden seitlich radial aus der Werkzeugantriebswelle 200 hervorstehen. In der in Fig. 1 dargestellten Position können die Enden des Querstiftes 194 frei innerhalb der zweiten Freilaufkupplung 190 rotieren, so daß diese vollständig ohne Funktion ist. Wird dagegen die Schiebehülse 184 nach rechts in Richtung auf den Oszillationsantrieb 164 in die in Fig. 2 dargestellte Position zurückgeschoben, so gelangt dieser Querstift 194 in einen Längsschlitz 197, der sich zwischen dem zweiten Lager 196 und der zweiten Freilaufkupplung 190 erstreckt. Damit wird eine formschlüssige Verbindung zwischen der Schalthülse 184 und der Werkzeugantriebswelle 200 in der in Fig. 2 dargestellten Position hergestellt.

In der in Fig. 2 dargestellten Linkslaufposition gelangt die zweite Freilaufkupplung 190 in Eingriff, da sie nunmehr das Wellenende der Abtriebswelle 180 umschließt. Dagegen ist die erste Freilaufkupplung 188 in der Linkslaufposition gemäß Fig. 2 außer Eingriff, da die erste Freilaufkupplung 188 in dieser Stellung einen Wellenabschnitt 183 der Abtriebswelle 180 mit geringerem Durchmesser umschließt. Somit wird in der in Fig. 2 dargestellten Linkslaufposition der Schalthülse 184 die Werkzeugantriebswelle 200 von der Abtriebswelle 180 über die zweite Freilaufkupplung 190 und die Schalthülse 184 mittels des in den Längsschlitz 197 der Schalthülse 184 eingreifenden Querstiftes 194 angetrieben. Dagegen verläuft der Kraftfluß in der in Fig. 1 dargestellten Rechtslaufposition, wie bereits erwähnt, von der Abtriebswelle 180 über die erste Freilaufkupplung 188 auf die Schalthülse 184 und von dieser mittels der Klauenkupplung 206 über die Trenneinrichtung 198 auf die Werkzeugantriebswelle 200.

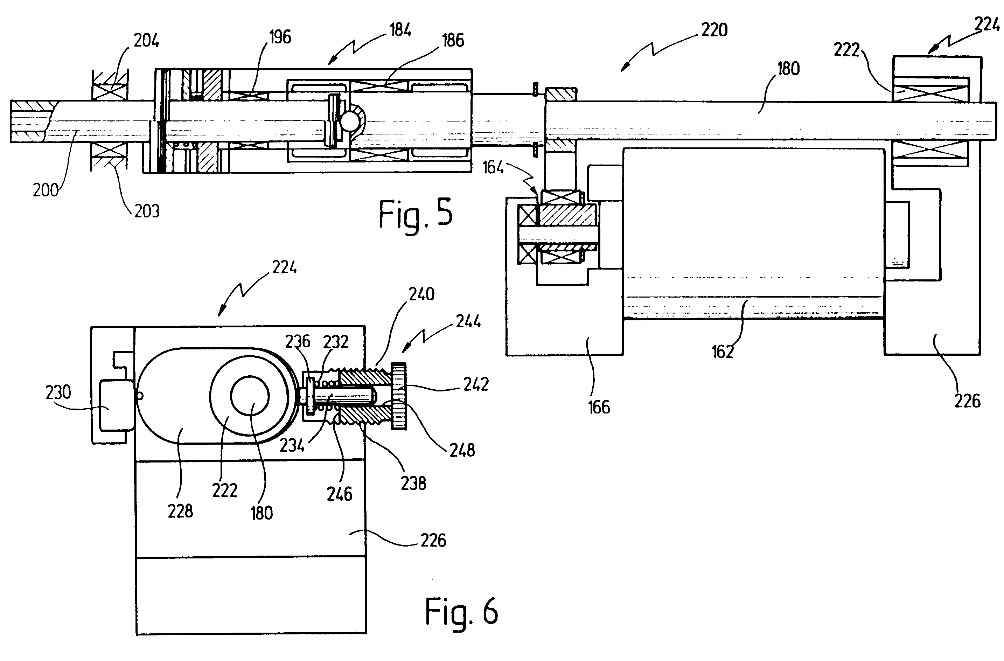

Am äußeren Ende der Abtriebswelle 180 ist ferner eine insgesamt mit der Ziffer 224 bezeichnete Abschalteinrichtung zur Abschaltung des Motors 162 bei Erreichen eines vorgegebenen Drehmomentes angeordnet, die nachfolgend anhand von Fig. 5 näher erläutert wird.

Einzelheiten und Funktionsweise der Trenneinrichtung 198 werden nunmehr anhand der Fig. 1 und 3 näher erläutert.

Die Trenneinrichtung 198 besteht aus dem ersten Kupplungselement 208, aus einem Zwischenkupplungselement 210 und aus einem zweiten Kupplungselement 212. Dabei ist zwischen dem ersten Kupplungselement 208 und dem Zwischenkupplungselement 210 ein Federelement 214 angeordnet, das als Schraubenfeder ausgebildet ist und das Zwischenkupplungselement 210 gegen das zweite Kupplungselement 212 drückt. Das erste Kupplungselement 208 ist als Kupplungsscheibe ausgebildet und drehbar, aber in Axialrichtung nicht verschiebbar, auf der Werkzeugantriebswelle 200 angeordnet. Wie bereits erwähnt, weist das erste Kupplungselement 208 auf der der Schalthülse 184 zugewandten Seite radial verlaufende Nockenkörper 207 auf, um mit den entsprechenden Nockenkörpern 205 an der Stirnfläche der Schalthülse 184 eine Klauenkupplung 206 zu bilden, die in der in Fig. 6 dargestellten Rechtslaufposition eine Übertragung des Drehmomentes von der Schalthülse 184 auf das erste Kupplungselement 208 sicherstellt.

Auf der dem Zwischenkupplungselement 210 zugewandten Seite des ersten Kupplungselementes 208 sind abgesetzte Nockenkörper 209 vorgesehen, die einen geraden, sich von der Stirnfläche aus erstreckenden Abschnitt aufweisen, bei dem sich die Mitnahmeflanke 215 senkrecht zu einer Radialebene erstreckt, an den sich ein schräger Abschnitt anschließt, bei dem die Mitnahmeflanke 216 schräg zu einer Radialebene verläuft. Dieser schräge Abschnitt eines jeden Nockens 209 läuft an der Stirnfläche 217 des Nockens aus, die sich parallel zu einer Radialebene erstreckt.

Das Zwischenkupplungselement 210 weist an seiner dem ersten Kupplungselement 208 zugewandten Seite gerade Nocken 211 auf, die sich in Radialrichtung erstrecken.

Das zweite Kupplungselement 212 ist als ein Querstift ausgebildet, der die Werkzeugantriebswelle 200 radial durchsetzt und mit seinen beiden Enden daraus hervorsteht. Das Zwischenkupplungselement 210, das frei drehbar und axial verschiebbar auf der Werkzeugantriebswelle 200 angeordnet ist, weist auf seiner dem zweiten Kupplungselement 212 zugewandten Seite in seiner Mantelfläche zwei um 180° zueinander versetzte V-förmige Ausnehmungen auf, die jeweils schräge Führungskurven 213 für den Querstift 212 bilden, an denen dieser entlanggleiten kann.

Die Trenneinrichtung 198 funktioniert folgendermaßen.

Wird der Schrauber auf eine Schraube aufgesetzt, so wird zunächst durch den Anpreßdruck das Federelement 214 zusammengedrückt und das Zwischenkupplungselement 210 durch den Federdruck gegen das zweite Kupplungselement 212 gedrückt, so daß der Querstift am dem Zwischenkupplungselement 212 zugewandten Ende der Führungsschräge 213 anliegt, so daß sich die in Fig. 3a gezeichnete Stellung ergibt. In der Rechtslaufposition überträgt nun die Abtriebswelle 180 ihre oszillierende Antriebsbewegung auf die erste Freilaufkupplung 188, über die diese Bewegung in eine intermittierende Antriebsbewegung im Uhrzeigersinn umgesetzt wird, die von der Schalthülse 184 über die Nocken 205, 207 der Klauenkupplung 206 auf das erste Kupplungselement 208 übertragen wird.

Durch das übertragene Drehmoment rücken die geraden Nocken 211 des Zwischenkupplungselementes 210 zunächst zwischen die geraden Mitnahmeflanken 215 der Nocken 209 des ersten Kupplungselementes 208 ein, so daß die Trennkupplung eingerückt ist und das Drehmoment formschlüssig überträgt. Infolge des übertragenen Drehmomentes wandert nun das Zwischenkupplungselement 210 mit seinen Führungskurven 213 gegen die Federkraft entlang der beiden Enden des Querstiftes 212, so daß sich die der oberen Hälfte von Fig. 3b gezeichnete Position ergibt.

Beim Anziehen der Verschraubung steigt nun in der letzten Phase das Drehmoment so lang an, bis die Abschalteinrichtung 224 den Motor 162 abschaltet.

Da nunmehr kein Drehmoment mehr übertragen wird, wird das Zwischenkupplungselement 210 durch das gespannte Federelement 214 bis in die Endposition gegen den Querstift 212 gedrückt, in der das runde Ende der V-förmigen Führungskurve 213 am Querstift 212 anschlägt, wobei die Trennkupplung gelöst wird, so daß sich die in der unteren Hälfte von Fig. 3b gezeichnete Position ergibt.

Der Aufbau der Abschalteinrichtung zur Abschaltung des Elektromotors 162 wird nunmehr anhand der Fig. 5 und 6 naher erläutert.

Eine leicht gegenüber der Ausführung gemäß Fig. 1 abgewandelte Werkzeugmaschine ist in Fig. 5 dargestellt und insgesamt mit der Ziffer 220 bezeichnet.

Dabei werden für entsprechende Teile die gleichen Bezugsziffern wie bei der Ausführung gemäß Fig. 1 verwendet.

Die Ausführung gemäß Fig. 5 unterscheidet sich von der Ausführung gemäß Fig. 1 im wesentlichen dadurch, daß die Abtriebswelle 180 nach hinten verlängert ist, so daß sich der Elektromotor 162 parallel zu einem über den Oszillationsantrieb 164 hinaus verlängerten Bereich der Abtriebswelle 180 erstreckt. Es ergibt sich somit insgesamt eine lange Bauform der Werkzeugmaschine 220 im Gegensatz zu einer kurzen Bauform der Werkzeugmaschine 160 gemäß Fig. 1, bei der der Elektromotor 162 parallel zur Abtriebswelle 180 derart angeordnet ist, daß die Schiebehülse 184 etwa parallel zum Elektromotor 162 angeordnet ist bzw. verschiebbar ist.

Auch bei der Ausführung gemäß Fig. 5 ist an dem der Schiebehülse 184 abgewandten Ende der Abtriebswelle 180 eine Abschalteinrichtung 224 für die Abschaltung des Elektromotors bei Erreichen eines voreingestellten Drehmomentes angeordnet. Ihr Aufbau entspricht vollständig dem Aufbau der in Fig. 1 angedeuteten Abschalteinrichtung 224.

Die Abschalteinrichtung 224 weist gemäß Fig. 5 einen Halter 226 auf, der an den Elektromotor 162 angeflanscht ist und in dem die Abtriebswelle 180 an ihrem der Werkzeugantriebswelle 200 gegenüberliegende Ende mit einem Lager 222 gelagert ist. Das andere Ende der Abtriebswelle 180 ist an der Schalthülse 184 mittels des Lagers 186 in der zuvor anhand von Fig. 1 beschriebenen Weise gelagert, die wiederum mit ihrem zweiten Lager 196 auf der Werkzeugantriebswelle 200 gelagert und axial zu dieser verschiebbar ist. Das der Werkzeugantriebswelle 200 zugewandte Ende der Abtriebswelle 180 ist somit über die Schalthülse 184 mittels des Lagers 186 und des Lagers 196 in Radialrichtung fixiert, wobei die Werkzeugantriebswelle 200 an ihrem anderen Ende wiederum mit dem Lager 204 am Maschinengehäuse 203 gelagert ist.

Das andere Lager 222 der Abtriebswelle 180 ist, wie im einzelnen aus Fig. 6 zu ersehen ist, in Radialrichtung mittels einer Gleitführung 228 um einen gewissen Betrag verschieblich befestigt. Das andere Lager 222 ist über eine Stelleinrichtung 244 mittels einer Feder 232 in Radialrichtung vorgespannt, so daß es gegen ein Sensorelement 230 beaufschlagt ist, das auf der gegenüberliegenden Seite der Gleitführung 228 angeordnet ist.

Bei Erreichen eines voreingestellten Grenzdrehmomentes weicht die Abtriebswelle 180 mit ihrem anderen Lager 222 gegen die Vorspannung der Feder 234 aus, so daß sich eine Kippbewegung der Abtriebswelle 180 ergibt. Diese Kippbewegung führt dazu, daß das Sensorelement 230 ein Signal erhält, was zur Abschaltung des Elektromotors führt. Zweckmäßigerweise ist das Sensorelement 230 zugleich als Abschalter für den Elektromotor 162 ausgeführt.

Da der erforderliche Kippwinkel außerordentlich klein ist und schon eine geringfügige Verschiebung der Abtriebswelle 180 in Radialrichtung an ihrem anderen Lager 222 ausreicht, um eine Abschaltung des Elektromotors 162 herbeizuführen, wird dieses geringfügige Spiel ohne weiteres von der Lagerung aufgenommen und wirkt sich nicht nachteilig auf die Funktion der Abtriebswelle 180 aus.

Um eine Einstellung der in Radialrichtung auf die Abtriebswelle 180 wirkenden Vorspannung zu ermöglichen, ist eine insgesamt mit der Ziffer 244 bezeichnete Stelleinrichtung vorgesehen, die ein Einstellelement 240 aufweist, das als Gewindestopfen ausgebildet ist, der in einem Gewinde 238 des Halters 226 mittels eines Stellringes 242 von außen verstellbar ist. Das andere Lager 222 ist über einen Stift 234 mittels der Kraft des Federelementes 232 beaufschlagt, das zwischen einem Bund 236 des Stiftes 234 und der Stirnfläche 246 des Einstellelementes 240 eingeschlossen ist. Der Stift 234 ist an seinem der Abtriebswelle 180 gegenüberliegenden Ende in einer zentralen Bohrung 248 des Einstellelementes 240 verschieblich aufgenommen. Wird das Einstellelement 240 weiter in das Gewinde 238 durch Verdrehen des Stellrings 242 eingeschraubt, so wird die Vorspannung des Federelementes 232 erhöht, so daß eine Abschaltung des Elektromotors 162 erst bei einem höheren Abschaltmoment erfolgt. Wird dagegen der Gewindestopfen weiter aus dem Gewinde 238 herausgeschraubt, so wird die Vorspannung des Federelementes 232, das vorzugsweise als eine den Stift 234 umschließende Spiralfeder ausgebildet ist, verringert, so daß sich ein geringeres Abschaltmoment ergibt.

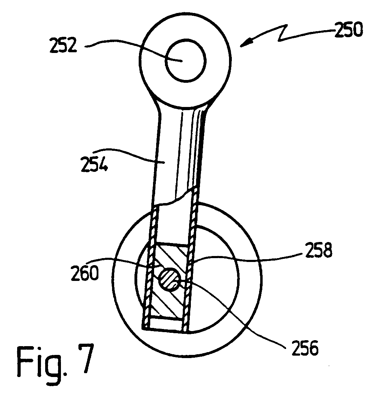

Eine alternative Ausführung des Oszillationsantriebes ist in Fig. 7 schematisch dargestellt und insgesamt mit der Ziffer 250 bezeichnet. Von der Motorwelle ist ein Exzenterelement 256 angetrieben, das mit einem annähernd zylindrischen Kolben 260 drehbeweglich verbunden ist. Der Kolben 260 ist von einer hohlzylindrischen Führung 258 eines Schwenkelementes 254 aufgenommen, dessen anderes Ende drehfest mit der Abtriebswelle 252 verbunden ist. Bei einer Drehung der Motorwelle wird die Bewegung des Exzenterelementes 256 über den Kolben 260 auf das Schwenkelement 254 übertragen, wobei der Kolben 260 innerhalb der hohlzylindrischen Führung 258 geführt ist und eine hin- und hergehende Bewegung ausführt. Somit wird die Bewegung des Exzenterelementes 256 über das Schwenkelement 254 in eine oszillierende Drehbewegung der Abtriebswelle 252 umgesetzt.

Es versteht sich, daß zahlreiche weitere Möglichkeiten für die Ausgestaltung des Oszillationsantriebes zur Verfügung stehen.

Es versteht sich, daß bei den zuvor beschriebenen Ausführungen als Antriebsmotor auch ein Pneumatikmotor, hydraulischer Motor oder andersartiger Motor verwendet werden kann.

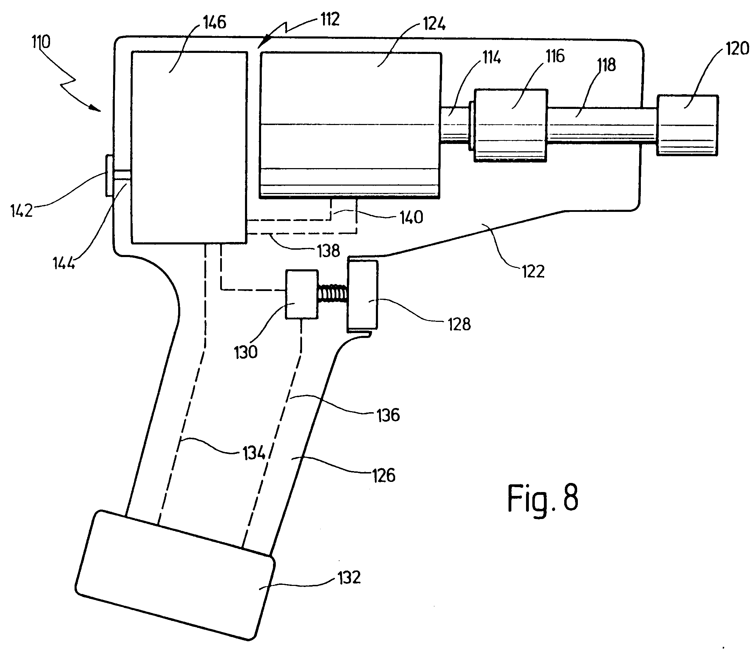

Ein weiteres Ausführungsbeispiel der Erfindung ist in Fig. 8 äußerst schematisch dargestellt und insgesamt mit der Ziffer 110 bezeichnet.

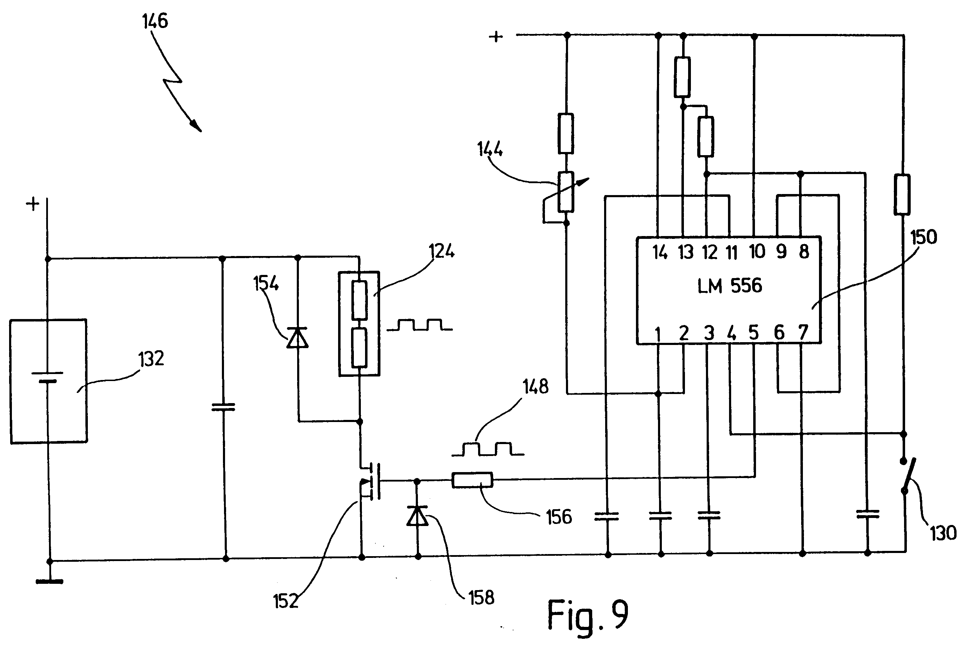

Es handelt sich hierbei um einen akkubetriebenen Schrauber, der im Gegensatz zu den zuvor beschriebenen Ausführungen nicht motorisch angetrieben ist sondern mittels eines Drehmagneten. Der Antrieb 112 umfaßt einen Einrichtungsdrehmagneten 124, der über eine Rückstellfeder (nicht dargestellt) entgegen seiner Drehrichtung beaufschlagt ist. Der Drehmagnet 124 wird über eine Steuerelektronik 146, die nachfolgend noch anhand von Fig. 9 kurz erläutert wird, mit einer rechteckförmigen Spannungsimpulsfolge konstanter Frequenz beaufschlagt. Die Abtriebswelle 114 des Drehmagneten treibt in der zuvor beschriebenen Weise eine Freilaufkupplung 116 an, über die eine Werkzeugantriebswelle 118 zum Antrieb einer Werkzeugaufnahme 120 angetrieben ist. Die ferner noch vorgesehene Abschalt- und Trenneinrichtung ist nicht dargestellt.

Zur Spannungsversorgung ist ein Akkumulator 132 vorgesehen, der austauschbar am Handgriff 126 des Gehäuses 122 angeordnet ist.

Der Akkumulator 132 ist über Leitungen 134, 136 mit der Steuerelektronik 146 und einem EIN-AUS-Schalter 130 verbunden, der über einen Taster 128 betätigt werden kann.

Die Steuerelektronik 146 weist eine Drehmomenteinstellung 144 auf, die über einen Stellring 142 von außerhalb des Gehäuses 122 betätigt werden kann.

Der Drehmagnet 124 wird während der Dauer eines Spannungsimpulses zu einer Drehung beaufschlagt. Während der nachfolgenden Zeitdauer, in der keine Spannung anliegt, wird der Drehmagnet 124 über die Rückstellfeder zurückbewegt, bis beim Anstieg des nächsten Spannungsimpulses wieder eine Vorwärtsdrehung erfolgt.

Die erzielbare Leistung bzw. das erzielbare Anzugsmoment des Schraubers ist über die Impulsenergie mittels einer Pulsbreiten-Modulation (PWM) einstellbar. Das auf das Werkzeug übertragene Drehmoment ist dabei abhängig von der Impulsenergie.

Die Spannungsimpulsfolge, die in Fig. 9 schematisch mit der Ziffer 148 angedeutet ist, kann über die Steuerelektronik 146 erzeugt werden, welche beispielsweise gemäß der in Fig. 5 gezeigten Schaltung aufgebaut ist. Hierzu wird ein Timer, beispielsweise ein LM 556 verwendet, dessen Discharge- und Threshold-Eingang 1 und 2 über einen regelbaren Widerstand 144 und einen Vorwiderstand an der positiven Speisespannung liegt. Die vom Ausgang 5 des Timers 150 gelieferte Spannung steht an einem Widerstand 156 an, der über eine Diode 158 an Masse liegt.

Über diese am Widerstand 156 abfallende Spannung wird ein Schalter 152, der zum Beispiel als Feldeffekttransistor (FET) ausgebildet sein kann, angesteuert. Der Drehmagnet 124 liegt zwischen der Speisespannung plus und dem Schalter 152 und ist durch eine Diode 154 überbrückt.

Die Impulsenergie läßt sich durch Verstellung des einstellbaren Widerstandes 144 einstellen, wodurch die Pulsbreite verändert wird.

Es versteht sich, daß die vorstehend kurz erläuterte Schaltung lediglich eine von vielen möglichen Ausführungen darstellt und daß zahlreiche andere Möglichkeiten zur Erzeugung der Spannungsimpulsfolge 148 bestehen.

## Patentansprüche

1. Schrauber mit einem Antrieb (12, 32, 72, 112; 162, 164, 180; 272, 274, 276), der eine Abtriebswelle (14; 34; 74; 114; 180; 276) umfaßt, die eine intermittierende Drehbewegung ausführt, und die über eine Freilaufkupplung (16; 36; 76; 116; 188, 190; 278) mit einer Werkzeugantriebswelle (18; 38; 78; 118; 200) zum Antrieb eines Werkzeuges (20; 282) gekoppelt ist, dadurch gekennzeichnet, daß eine Abschalteinrichtung (96, 98; 100; 224) zur Abschaltung des Antriebes (72; 162, 164, 180) bei Erreichung eines vorgegebenen Drehmomentes und eine Trenneinrichtung (198) zum Trennen der Werkzeugantriebswelle (78; 200) vom Antrieb (72; 162, 164, 180) vorgesehen sind, daß die Trenneinrichtung (198) ein mit der Werkzeugantriebswelle (200) drehbar verbundenes erstes Kupplungselement (208) aufweist, das mit der Abtriebsseite einer Freilaufkupplung (188) koppelbar ist, sowie ein zweites Kupplungselement (212) aufweist, das drehfest mit der Werkzeugantriebswelle (200) verbunden ist, daß zwischen dem ersten Kupplungselement (208) und dem zweiten Kupplungselement (212) ein Zwischenkupplungselement (210) angeordnet ist, das mit dem zweiten Kupplungselement (212) eine Mitnahmekupplung bildet, über die das Zwischenkupplungselement (210) unter Last in Richtung auf das erste Kupplungselement (208) verschiebbar ist, daß das Zwischenkupplungselement (210) mit dem ersten Kupplungselement (208) eine bei Axialverschiebung des Zwischenkupplungselementes (210) ausrückbare Trennkupplung bildet, und daß das Zwischenkupplungselement (210) in Richtung auf das zweite Kupplungselement (212) federnd beaufschlagt ist.

2. Schrauber nach Anspruch 1, gekennzeichnet durch eine Einrichtung (94; 184) zur Umkehr der Drehrichtung der Abtriebswelle (14; 34; 74; 114; 200).

3. Schrauber nach Anspruch 1 oder 2, gekennzeichnet durch eine Stelleinrichtung (98; 244) zur Voreinstellung des Abschaltmomentes.

4. Schrauber nach einem der vorhergehenden Ansprüche, dadurch gekennzeichnet, daß der Antrieb einen Motor (44; 84; 162; 272) umfaßt, der mit einem Oszillationsantrieb (49; 89; 164; 250; 274) gekoppelt ist, über den eine Drehbewegung der Motorwelle (48; 88; 168) in eine oszillierende Drehbewegung der die Freilaufkupplung (36; 76; 188, 190; 278) antreibenden Abtriebswelle (34; 74; 180; 252; 276) umgesetzt wird.

5. Schrauber nach Anspruch 4, dadurch gekennzeichnet, daß der Oszillationsantrieb (49; 89; 164; 250) ein von der Motorwelle (48; 88; 168) angetriebenes Exzenterelement (50; 170; 256) umfaßt, von dem ein Schwenkelement (52; 174; 254) angetrieben ist, das mit der Abtriebswelle (34; 74; 180; 252) drehfest verbunden ist.

6. Schrauber nach einem der vorhergehenden Ansprüche, dadurch gekennzeichnet, daß der Antrieb (32; 72; 162, 164, 180) einen Elektromotor (44; 84; 162; 272), einen Druckluftmotor oder einen Hydraulikmotor aufweist.

7. Schrauber nach einem der Ansprüche 1 bis 3, dadurch gekennzeichnet, daß der Antrieb (112) einen Drehmagnet (124) umfaßt, der mit einer Spannungsimpulsfolge zur Erzeugung der intermittierenden Drehbewegung beaufschlagt ist.

8. Schrauber nach Anspruch 7, dadurch gekennzeichnet, daß der Drehmagnet (124) ein Einrichtungsdrehmagnet ist, der mit einer Rückstellkraft entgegen der Drehrichtung beaufschlagt ist.

9. Schrauber nach Anspruch 7, dadurch gekennzeichnet, daß der Drehmagnet ein Zweirichtungsdrehmagnet ist.

10. Schrauber nach einem der Ansprüche 1 bis 3, dadurch gekennzeichnet, daß der Antrieb einen Schrittmotor umfaßt, der mit einer Spannungsimpulsfolge zur Erzeugung der intermittierenden Drehbewegung beaufschlagt ist.

11. Schrauber nach einem der Ansprüche 7 bis 10, dadurch gekennzeichnet, daß die Impulsfrequenz und/oder die Impulsdauer einstellbar ist.

12. Schrauber nach einem der Ansprüche 1 bis 11, dadurch gekennzeichnet, daß die Abtriebswelle (180) von zwei im Abstand voneinander angeordneten Lagern (186, 222) gehalten ist, wobei das eine Lager (186) in Radialrichtung der Abtriebswelle (180) fixiert ist, während das andere Lager (222) entgegen einer Vorspannung in Radialrichtung verschiebbar angeordnet ist, und daß der Abtriebswelle (180) ein Sensorelement (230) zugeordnet ist, um den Antrieb (162, 164) bei Auftreten einer Radialverschiebung abzuschalten.

13. Schrauber nach Anspruch 12, dadurch gekennzeichnet, daß eine Stelleinrichtung (244) zur Erzeugung einer einstellbaren Vorspannung vorgesehen ist.

14. Schrauber nach Anspruch 12 oder 13, dadurch gekennzeichnet, daß das andere Lager (222) von einer Gleitführung (228) aufgenommen ist, die eine Verschiebung in Radialrichtung der Abtriebswelle (180) erlaubt.

15. Schrauber nach einem der Ansprüche 2 bis 14, dadurch gekennzeichnet, daß eine erste (188) im Uhrzeigersinn mitnehmende Freilaufkupplung und eine zweite (190) im Gegenuhrzeigersinn mitnehmende Freilaufkupplung in Axialrichtung hintereinander angeordnet sind, und daß ein Schaltelement (184) vorgesehen ist, um wahlweise entweder die erste (188) oder die zweite (190) Freilaufkupplung mit der Werkzeugantriebswelle (200) zu koppeln.

16. Schrauber nach Anspruch 15, dadurch gekennzeichnet, daß das Schaltelement (184) als Schiebehülse ausgebildet ist, die in Axialrichtung der Abtriebswelle (180) verschiebbar gelagert ist, wobei in einer ersten in Richtung auf die Werkzeugantriebswelle (200) vorgeschobenen Position der Schiebehülse (184) die erste Freilaufkupplung (188) über die Schiebehülse (184) mit der Werkzeugantriebswelle (200) gekoppelt ist, und wobei in einer zweiten zurückgeschobenen Position der Schiebehülse (184) die zweite Freilaufkupplung (190) mit der Werkzeugantriebswelle (200) gekoppelt ist.

17. Schrauber nach Anspruch 16, dadurch gekennzeichnet, daß die Schiebehülse (184) in der ersten Position über eine Klauenkupplung (206) mit der Werkzeugantriebswelle (200) gekoppelt ist und in der zweiten Position über einen Längsschlitz der Schiebehülse (184) mit der Werkzeugantriebswelle (200) gekoppelt ist, in den ein die Werkzeugantriebswelle (200) durchsetzender Querstift (194) eingreift.

18. Schrauber nach einem der vorhergehenden Ansprüche, dadurch gekennzeichnet, daß die durch das erste Kupplungselement (208) und das Zwischenkupplungselement (210) gebildete Trennkupplung gerade Nocken (211) mit einer sich senkrecht zu einer Radialebene erstreckenden Mitnahmeflanke an einem (210) der Elemente (208, 210) aufweist, sowie abgesetzte Nocken (209) mit einem geraden Abschnitt, bei dem sich die Mitnahmeflanke (215) senkrecht zur einer Radialebene erstreckt, und mit einem schrägen, sich an den geraden Abschnitt anschließenden Abschnitt, bei dem sich die Mitnahmeflanke (216) schräg zu einer Radialebene erstreckt, an einem anderen (208) der Elemente (208, 210) aufweist.

19. Schrauber nach einem der vorhergehenden Ansprüche, dadurch gekennzeichnet, daß das zweite Kupplungselement (212) einen sich in Radialrichtung erstreckenden Vorsprung aufweist, der mit einer Führungskurve (213) des Zwischenkupplungselementes (210), die sich schräg zu einer Radialebene erstreckt, zusammenwirkt.

20. Schrauber nach Anspruch 19, dadurch gekennzeichnet, daß der sich in Radialrichtung erstreckende Vorsprung durch einen Querstift (212) gebildet ist, der die Abtriebswelle (200) in Radialrichtung durchsetzt.

## Claims

1. Screw driver comprising a drive (12, 32, 72, 112; 162, 164, 180; 272, 274, 276) having an output shaft (14; 34; 74; 114; 180; 276) which performs an intermittant rotary motion and which is coupled to a tool drive shaft (18; 38; 78; 118; 200) via an overrunning clutch (16; 36; 76; 116; 188, 190; 278) for driving a tool (20; 282), characterized in that a shutoff device (96, 98; 100; 224) is provided for shutting off the drive (72; 162, 164, 180) when a given torque is reached, and a means for interrupting (198) is provided for interrupting said tool drive shaft (78; 200) from said drive (72; 162, 164, 180), and that said means for interrupting (198) comprises a first coupling element (208) which is rotatably coupled to said tool drive shaft (200) and which can be coupled with its output side to an overrunning clutch (188), and which further comprises a second coupling element (212) which is connected with said tool drive shaft (200) non-rotatable, in that between said first coupling element (208) and said second coupling element (212) an intermediate coupling element (210) is provided which forms a clutch coupling for sliding the intermediate coupling element (210) towards said first coupling element (208) under power, in that said intermediate coupling element (210) forms a release clutch together with said first coupling element (208) which releases upon axial displacement of said intermediate coupling element (210), and in that said intermediate coupling element (210) is a spring stressed towards said second coupling element (212).

2. Screw driver according to claim 1, characterized by a means (94; 184) for reversing the rotation direction of said output shaft (14; 34; 74; 114; 200).

3. Screw driver according to claim 1 or 2, characterized by an adjusting means (98; 244) for presetting the cutoff torque.

4. Screw driver according to one of the preceding claims, characterized in that said drive comprises a motor (44; 84; 162; 272) which is coupled to an oscillating drive (49; 89; 164; 250; 274) which converts a rotary motion of the motor shaft (48; 88; 168) into an oscillating rotary motion of said output shaft (34; 74; 180; 252; 276) driving said overrunning clutch (36; 76; 188, 190; 278).

5. Screw driver according to claim 4, characterized in that said oscillating drive (49; 89; 164; 250) comprises an ex-center element (50; 170; 256) driven by said motor shaft (48; 88; 168) and driving a pivot element (52; 174; 254) which is connected to said output shaft (34; 74; 180; 252) non-rotatably.

6. Screw driver according to one of the preceding claims, characterized in that said drive (32; 72; 162, 164, 180) comprises an electric motor (44; 84; 162; 272), a pneumatic motor or a hydraulic motor.

7. Screw driver according to one of claims 1 to 3, characterized in that said drive (112) comprises a rotary magnet (124) which is subjected to a voltage impulse sequence for effecting an intermittent rotary motion.

8. Screw driver according to claim 7, characterized in that said rotary magnet (124) is a one direction rotary magnet which is prestressed against its rotary direction by a restoring force.

9. Screw driver according to claim 7, characterized in that said rotary magnet is a two direction rotary magnet.

10. Screw driver according to one of claims 1 to 3, characterized in that said drive comprises a stepping motor which is subjected to a voltage impulse sequence for effecting an intermittent rotary motion.

11. Screw driver according to one of claims 7 to 10, characterized in that the impulse frequency and/or the impulse length is adjustable.

12. Screw driver according to one of claims 1 to 11, characterized in that said output shaft (180) is held by two bearings (186; 222) arranged at a spacing from one another, the one bearing (186) immobilized in the radial direction of the output shaft (180), while the other bearing (222) is arranged displaceably in the radial direction against a preload, and in that a center element (230) is associated with the output shaft (180) to shut off the drive mechanism (162, 164) when a radial displacement occurs.

13. Screw driver according to claim 12, characterized in that an adjusting means (244) for effecting an adjustable preload is provided.

14. Screw driver according to claim 12 or 13, characterized in that the other bearing (222) is received by a plane guide (228) which allows a displacement of the output shaft (180) in the radial direction.

15. Screw driver according to one of claims 2 to 14, characterized in that a first (188) overrunning clutch, engaging clockwise, and a second (190) overrunning clutch, engaging counterclockwise, are arranged axially one after another, and in that a switching element (184) is provided for selectively coupling the first (188) or the second (190) overrunning clutch to said tool drive shaft (200).

16. Screw driver according to claim 15, characterized in that said switching element (184) is designed as a shifting sleeve which is held shiftable in axial direction of said output shaft (180), wherein in a first position of the shifting sleeve (184), displaced forwardly into the direction of the tool drive shaft (200), the first overrunning clutch (188) is coupled via the shifting sleeve (184) to said tool drive shaft (200), and wherein in a second position of the shifting sleeve (184), displaced backwardly, the second overrunning clutch (190) is coupled to the tool drive shaft (200).

17. Screw driver according to claim 16, characterized in that the shifting sleeve (184) is coupled to the tool drive shaft (200) via a claw clutch, when in a first position, and is coupled to the tool drive shaft (200) via a longitudinal slit of the shifting sleeve (184), when in a second position, into which a cross pin (194) extends, which intersects the tool drive shaft (200).

18. Screw driver according to one of the preceding claims, characterized in that the release clutch formed by said first coupling element (208) and said intermediate coupling element (210) comprises straight cams (211) having a catch flank (210) at one of said elements (208, 210) extending perpendicularly to a radial plane, and further comprising offset cams (209) having a straight section, at which a catch flank (215) extends perpendicularly to a radial plane, as well as a slanted section, following said straight section, at which said catch flank (216) extends slanted with respect to a radial plane, at one of said other (208) elements (208, 210).

19. Screw driver according to one of the preceding claims, characterized in that said second coupling element (212) comprises a protrusion extending in radial direction and cooperating with a guide curvature (213) of said intermediate coupling element (210) which extends slanted with respect to a radial plane.

20. Screw driver according to claim 19, characterized in that said protrusion extending in radial direction is formed by a lateral pin (212) which protrudes through said output shaft (200) in radial direction.

## Revendications

1. Visseuse comportant un dispositif d'entraînement (12, 32, 72, 112 ; 162, 164, 180 ; 272, 274, 276) qui comprend un arbre de sortie (14 ; 34 ; 74 ; 114 ; 180 ; 276) qui exécute un mouvement de rotation intermittent, et qui est accouplé, par un accouplement à roue libre (16 ; 36 ; 76 ; 116 ; 188, 190 ; 278), à un arbre menant d'outil (18 ; 38 ; 78 ; 118 ; 200) pour l'entraînement d'un outil (20 ; 282), caractérisée en ce que sont prévus un dispositif de mise à l'arrêt (96, 98 ; 100 ; 224) pour la mise à l'arrêt du dispositif d'entraînement (72 ; 162, 134, 180) lorsqu'est atteint un couple de rotation donné ainsi qu'un dispositif de séparation (198) pour séparer l'arbre menant d'outil (78 ; 200) du dispositif d'entraînement (72 ; 162, 164, 180), en ce que le dispositif de séparation (198) présente un premier élément d'accouplement (208) lié en rotation à l'arbre menant d'outil (200), lequel élément d'accouplement peut être accouplé au côté sortie d'un accouplement à roue libre (188), ainsi qu'un deuxième élément d'accouplement (212), qui est lié solidairement en rotation avec l'arbre menant d'outil (200), en ce qu'entre le premier élément d'accouplement (208) et le deuxième élément d'accouplement (212) est disposé un élément d'accouplement intermédiaire (210) qui forme avec le deuxième élément d'accouplement (212) un accouplement d'entraînement, par lequel l'élément d'accouplement intermédiaire (210) peut être déplacé, sous charge, en direction du premier élément d'accouplement (208), en ce que l'élément d'accouplement intermédiaire (210) forme avec le premier élément d'accouplement (208) un accouplement de séparation débrayable par coulissement axial de l'élément d'accouplement intermédiaire (210) et en ce que l'élément d'accouplement intermédiaire (210) est sollicité élastiquement en direction du deuxième élément d'accouplement (212).

2. Visseuse selon la revendication 1, caractérisée par un dispositif (94 ; 184) pour l'inversion du sens de rotation de l'arbre de sortie (14 ; 34 ; 74 ; 114 ; 200).

3. Visseuse selon la revendication 1 ou 2, caractérisée par un dispositif de réglage (98 ; 244) pour le préréglage du couple de coupure.

4. Visseuse selon l'une des revendications précédentes, caractérisée en ce que le dispositif d'entraînement comprend un moteur (44 ; 84 ; 162 ; 272), qui est accouplé avec un dispositif d'entraînement en oscillation (49 ; 89 ; 164 ; 250 ; 274), par lequel un mouvement de rotation de l'arbre moteur (48 ; 88 ; 168) est converti en un mouvement de rotation oscillant de l'arbre de sortie (34 ; 74 ; 180 ; 252 ; 276), entraînant l'accouplement à roue libre (36 ; 76 ; 188, 190 ; 278).

5. Visseuse selon la revendication 4, caractérisée en ce que le dispositif d'entraînement en oscillation (49 ; 89 ; 164 ; 250) comprend un élément à excentrique (50 ; 170 ; 256), entraîné par l'arbre moteur (48 ; 88 ; 168), par lequel est entraîné un élément pivotant (52 ; 174 ; 254), qui est lié solidairement en rotation avec l'arbre de sortie (34 ; 74 ; 180 ; 252).

6. Visseuse selon l'une des revendications précédentes, caractérisée en ce que le dispositif d'entraînement (32 ; 72 ; 162, 164, 180) comporte un moteur électrique (44 ; 84 ; 162 ; 262), un moteur à air comprimé ou un moteur hydraulique.

7. Visseuse selon l'une des revendications 1 à 3, caractérisée en ce que le dispositif d'entraînement (112) comprend un aimant rotatif (124), qui est sollicité par une succession d'impulsions de tension destinée à produire le mouvement de rotation intermittent.

8. Visseuse selon la revendication 7, caractérisée en ce que l'aimant rotatif (124) est un aimant à un sens de rotation, qui est soumis à une force de rappel dans le sens contraire au sens de rotation.

9. Visseuse selon la revendication 7, caractérisée en ce que l'aimant rotatif est un aimant à deux sens de rotation.

10. Visseuse selon l'une des revendications 1 à 3, caractérisée en ce que le dispositif d'entraînement comprend un moteur pas à pas, qui reçoit une succession d'impulsions de tension destinée à produire le mouvement de rotation intermittent.

11. Visseuse selon l'une des revendications 7 à 10, caractérisée en ce que la fréquence des impulsions et/ou la durée des impulsions sont réglables.

12. Visseuse selon l'une des revendications 1 à 11, caractérisée en ce que l'arbre de sortie (180) est maintenu par deux paliers (186, 222) disposés à distance l'un de l'autre, un palier (186) étant fixé dans la direction radiale de l'arbre de sortie (180), tandis que l'autre palier (222) est disposé de manière à pouvoir coulisser dans la direction radiale, à l'encontre d'une précontrainte, et en ce qu'à l'arbre de sortie (180) est associé un élément à capteur (230), afin de mettre à l'arrêt le dispositif d'entraînement (162, 164) lorsque se produit un coulissement radial.

13. Visseuse selon la revendication 12, caractérisée en ce qu'un dispositif de réglage (244) est prévu pour produire une précontrainte réglable.

14. Visseuse selon la revendication 12 ou 13, caractérisée en ce que l'autre palier (222) est monté dans un guidage glissant (228), qui permet un coulissement dans la direction radiale de l'arbre de sortie (180).

15. Visseuse selon l'une des revendications 2 à 14, caractérisée en ce qu'un premier accouplement à roue libre (188) entraînant dans le sens des aiguilles d'une montre et un deuxième accouplement à roue libre (190) entraînant dans le sens contraire aux aiguilles d'une montre, sont disposés l'un à la suite de l'autre dans la direction axiale et en ce qu'il est prévu un élément de commutation (184), pour accoupler au choix soit le premier accouplement à roue libre (188), soit le deuxième (190) avec l'arbre menant d'outil (200).

16. Visseuse selon la revendication 15, caractérisée en ce que l'élément de commutation (184) est réalisé en tant que manchon coulissant, qui est monté de manière à pouvoir coulisser dans la direction axiale de l'arbre de sortie (180), en ce que dans une première position avancée en direction de l'arbre menant d'outil (200) du manchon coulissant (184), le premier accouplement à roue libre (188) est accouplé à l'arbre menant d'outil (200) par l'intermédiaire du manchon coulissant (184), et en ce que dans une deuxième position reculée du manchon coulissant (184), le deuxième accouplement à roue libre (190) est accouplé à l'arbre menant d'outil (200).

17. Visseuse selon la revendication 16, caractérisée en ce que le manchon coulissant (184) est accouplé dans la première position à l'arbre menant d'outil (200) par l'intermédiaire d'un accouplement à griffes (206), et en ce que dans la deuxième position, il est accouplé à l'arbre menant d'outil (200), par l'intermédiaire d'une fente longitudinale du manchon coulissant (184), dans laquelle s'engage une goupille transversale (194) traversant l'arbre menant d'outil (200).

18. Visseuse selon l'une des revendications précédentes, caractérisée en ce que l'accouplement de séparation formé par le premier élément d'accouplement (208) et par l'élément d'accouplement intermédiaire (210) présentent des cames (211) droites avec un flanc d'entraînement s'étendant perpendiculairement à un plan radial, sur l'un (210) des éléments (208, 210), ainsi qu'une came (209) étagée avec une portion droite, dans laquelle le flanc d'entraînement (215) s'étend perpendiculairement à plan radial, et avec une portion oblique, se raccordant à la portion droite, dans laquelle le flanc d'entraînement (216) s'étend obliquement par rapport à un plan radial, sur un autre (208) des éléments (208, 210).

19. Visseuse selon l'une des revendications précédentes, caractérisée en ce que le deuxième élément d'accouplement (212) présente une saillie s'étendant dans la direction radiale, qui coopère avec un profil de guidage (213) de l'élément d'accouplement intermédiaire (210), qui s'étend obliquement par rapport à un plan radial.

20. Visseuse selon la revendication 19, caractérisée en ce que la saillie s'étendant dans la direction radiale est formée par une goupille transversale (212), qui traverse l'arbre de sortie (200) dans la direction radiale.
